# EUROPÄISCHE PATENTSCHRIFT

(11) **EP 1 723 194 B1**
(45) Veröffentlichungstag und Bekanntmachung des Hinweises auf die Patenterteilung: **07.01.2015**
(21) Anmeldenummer: 05707493.2
(22) Anmeldetag: 18.02.2005
(51) Int. Cl.: C08J 7/04, B32B 27/40, B29C 37/00, B29C 63/22

(54) **STRAHLUNGSHÄRTBARE VERBUNDSCHICHTPLATTE ODER -FOLIE UND IHRE VERWENDUNG ZUR BESCHICHTUNG VON FORMTEILEN**
RADIATION CURABLE COMPOSITE LAYERED PLATE OR FILM AND ITS USE FOR COATING MOULDED ARTICLES
PLAQUE OU FEUILLE STRATIFIEE COMPOSITE DURCISSABLE PAR RAYONNEMENT ET SON UTILISATION POUR LE REVETEMENT DE PIECES MOULEES

(30) Priorität: 24.02.2004 DE 102004009437
(43) Veröffentlichungstag der Anmeldung: 22.11.2006
(73) Patentinhaber: BASF SE, 67056 Ludwigshafen (DE)
(72) Erfinder: GRUBER, Nick, 68161 Mannheim (DE); SCHWALM, Reinhold, 67157 Wachenheim (DE); BECK, Erich, 68526 Ladenburg (DE); MENZEL, Klaus, 67069 Ludwigshafen (DE); HEISCHKEL, Yvonne, 68199 Mannheim (DE)
(74) Vertreter: Reinhardt, Jürgen
(86) Internationale Anmeldenummer: PCT/EP2005/001672
(87) Internationale Veröffentlichungsnummer: WO 2005/080484

(56) Entgegenhaltungen:
- EP-A- 0 361 351
- EP-A- 0 819 516
- WO-A-00/39183
- WO-A-00/63015

## Beschreibung

Die Erfindung betrifft eine strahlungshärtbare Verbundschichtplatte oder -folie aus mindestens einer Substratschicht und mindestens einer Deckschicht, die eine strahlungshärtbare Masse enthält mit einer Glasübergangstemperatur unter 50°C und hoher Doppelbindungsdichte.

Des weiteren betrifft die Anmeldung ein Verfahren zur Herstellung der strahlungshärtbaren Verbundschichtplatten oder -folie sowie ein Verfahren zur Herstellung von Formteilen, welche mit dieser Platte oder Folie beschichtet sind und deren Verwendung.

Aus EP-A2 819 516 und EP-A2 819 520 sind Lackfolien bekannt, wobei der Lack eine Glasübergangstemperatur unter 40°C aufweist und das Bindemittel beispielsweise Phosphazenharze, Urethane oder Acrylate sein kann. Die Härtung muß in zwei Schritten erfolgen. Vor dem Aufkleben der Folie auf Substrate erfolgt eine Teilhärtung, erst danach die Endhärtung.

Aus EP-A-361 351 ist ebenfalls eine Lackfolie bekannt. Hier erfolgt die Strahlungshärtung der Folie vor dem Aufbringen der Folie auf die zu beschichtenden Formteile.

EP-A2 874 027 offenbart elektronenblitzhärtbare Zusammensetzungen aus zwei Komponenten, von denen die erste eine monofunktionelle strahlungshärtbare Verbindung, deren Homopolymere eine Glasübergangstemperatur von 20 °C oder mehr aufweist, ist, und die zweite ein Di(Meth)Acrylat im Verhältnis 10:90 - 90:10. Derartigen Zusammensetzungen kann optional noch ein höherfunktionelles Acrylat beigemischt werden.

Nachteilig daran ist, daß die monofunktionellen (Meth)Acrylate wegen ihres niedrigen Molekulargewichts oftmals eine hohe Flüchtigkeit aufweisen, was wegen der generellen Toxizität von (Meth)Acrylaten die ungehärteten Beschichtungsmassen gesundheitlich bedenklich macht. Außerdem führt der Einsatz von monofunktionellen (Meth)Acrylaten nur zu einer geringen Vernetzungsdichte, die jedoch für positive Lackeigenschaften gewünscht ist.

Nachteilig bei den bisher bekannten strahlungshärtbaren Lackfolien ist, daß die Strahlenhärtung oft in mehreren Schritten erfolgen muß, wie in EP-A2 819 546 beschrieben. Bei einer vollständigen Strahlungshärtung der Folie vor dem Beschichtungsvorgang wird die Folie oft spröde und schwer verformbar, was nachteilig für die weitere Verarbeitung der Folie ist.

WO 00/63015 offenbart Verbundschichtplatten oder -folien, die eine Deckschicht mit einer Glasübergangstemperatur oberhalb von 40 °C und einer Doppelbindungsdichte bis zu 0,2 mol/100g aufweisen. Nachteilig an derartigen Verbundschichtplatten ist deren mangelhafte Kratzfestigkeit und ein lediglich geringer Glanz.

Aufgabe der vorliegenden Erfindung waren daher strahlungshärtbare Verbundschichtplatten oder -folien, welche sich leicht verarbeiten und mit möglichst einfachen Verfahren zur Beschichtung von Formteilen verwenden lassen. Die beschichteten Formteile sollen gute mechanische Eigenschaften und gute Beständigkeiten gegen äußere Einflüsse aufweisen und insbesondere gegen mechanische Einwirkungen stabil sein, wie z.B. eine verbesserte Kratzfestigkeit haben, eine hohe Elastizität aufweisen und zusätzlich verbessserte optische Eigenschaften, wie beispielsweise einen erhöhten Glanz haben.

Demgemäß gefunden wurden strahlungshärtbare Verbundschichtplatten oder -folien aus mindestens einer Substratschicht und mindestens einer Deckschicht zur Beschichtung von Formteilen, wobei die Deckschicht aus einer strahlungshärtbaren Masse besteht, die ein Bindemittel mit einer Glasübergangstemperatur unterhalb von 50 °C und einem Anteil an ethylenisch ungesättigten Gruppen von mehr als 2 mol/kg Bindemittel enthält, im nachfolgenden kurz Folie genannt.

Gefunden wurden auch Verfahren zur Beschichtung von Formteilen mit der Folie und die beschichteten Formteile.

Die Folie besteht zwingend aus einer Substratschicht und einer Deckschicht, die auf die Substratschicht direkt oder, falls weitere Zwischenschichten vorhanden sind, indirekt aufgebracht ist.

### Deckschicht

Die Deckschicht ist strahlungshärtbar. Als Deckschicht findet daher eine strahlungshärtbare Masse Verwendung, die radikalisch oder ionisch härtbare Gruppen (kurz härtbare Gruppen) enthält. Bevorzugt sind radikalisch härtbare Gruppen.

Bevorzugt ist die strahlungshärtbare Masse transparent. Auch nach erfolgter Härtung ist die Deckschicht bevorzugt transparent, d.h. es handelt sich um eine Klarlackschicht.

Wesentlicher Bestandteil der strahlungshärtbaren Massen ist das Bindemittel, welches durch Filmbildung die Deckschicht ausbildet.

Vorzugsweise enthält die strahlungshärtbare Masse mindestens ein Bindemittel ausgewählt aus der Gruppe bestehend aus
i) Polymere mit ethylenisch ungesättigten Gruppen mit einer mittleren Molmasse Mₙ von mehr als 2000 g/mol
ii) Mischungen von i) mit von i) unterschiedlichen, ethylenisch ungesättigten, niedermolekularen Verbindungen mit einer Molmasse von weniger als 2000 g/mol
iii) Mischungen von gesättigten thermoplastischen Polymeren mit ethylenisch ungesättigten Verbindungen.

### zu i)

Als Polymere geeignet sind z.B. Polymere von ethylenisch ungesättigten Verbindungen, aber auch Polyester, Polyether, Polycarbonate, Polyepoxide oder Polyurethane mit einer Molmasse, von mehr als 2000 g/mol.

In Betracht kommen beispielsweise ungesättigte Polyesterharze, welche im wesentlichen aus Polyolen, insbesondere Diolen, und Polycarbonsäure, insbesondere Dicarbonsäure, bestehen, wobei eine der Veresterungskomponenten eine copolymerisierbare, ethylenisch ungesättigte Gruppe enthält. Z.B. handelt es sich dabei um Maleinsäure, Fumarsäure oder Maleinsäureanhydrid.

Bevorzugt sind Polymere von ethylenisch ungesättigten Verbindungen, wie sie insbesondere durch radikalische Polymerisation erhalten werden.

Bei den radikalisch polymerisierten Polymeren handelt es sich insbesondere um Polymere, die zu mehr als 40 Gew.-%, besonders bevorzugt zu mehr als 60 Gew.-% aus Acrylmonomeren, insbesondere C₁-C₈-, bevorzugt C₁-C₄-Alkyl(meth)acrylaten, besonders bevorzugt Methyl(meth)acrylat, Ethyl(meth)acrylat oder n-Butyl(meth)acrylat, aufgebaut sind.

Als ethylenisch ungesättigte Gruppen enthalten die Polymeren beispielsweise Vinylether und/oder insbesondere (Meth)acrylgruppen. Diese könne z.B. durch Umsetzung von (Meth)acrylsäure mit Epoxidgruppen im Polymer (z.B. durch Mitverwendung von Glycidyl(meth)acrylat als Comonomer) an das Polymer gebunden sein.

Epoxid(meth)acrylate sind erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, *iso-*Butylenoxid, 1-Butenoxid, 2-Butenoxid, Vinyloxiran, Styroloxid oder Epichlorhydrin, bevorzugt sind Ethylenoxid, Propylenoxid, *iso*-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether; Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-Epoxypropoxy)phenyl]octahydro-4,7-methano-5H-inden) (CAS-Nr. [13446-85-0]), Tris[4-(2,3-epoxypropoxy)phenyl]methan Isomere )CAS-Nr. [66072-39-7]), Phenol basierte Epoxy Novolake (CAS-Nr. [9003-35-4]) und Kresol basierte Epoxy Novolake (CAS-Nr. [37382-79-9]).

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Die Epoxid(meth)acrylate und -vinylether haben vorzugsweise ein zahlenmittleres Molgewicht Mₙ von 2000 bis 20000, besonders bevorzugt von 2000 bis 10000 g/mol und ganz besonders bevorzugt von 2000 bis 3000 g/mol; der Gehalt an (Meth)acryl- oder Vinylethergruppen beträgt vorzugsweise 1 bis 5, besonders bevorzugt 2 bis 4 pro 1000 g Epoxid(meth)acrylat oder Vinyletherepoxid (bestimmt durch Gelpermeationschromatographie mit Polystyrol als Standard und Tetrahydrofuran als Elutionsmittel).

Bevorzugt sind ebenfalls Polyurethane. Diese enthalten bevorzugt als ungesättigte Gruppen ebenfalls (Meth)acrylgruppen, die z.B. durch Umsetzung von Hydroxyalkyl(meth)acrylaten mit Isocyanatgruppen an das Polyurethan gebunden sind.

Deratige Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan(meth)acrylate enthalten zusätzlich noch ionische und/oder nichtionische hydrophile Gruppen, welche z.B. durch Aufbaukomponenten wie Hydroxycarbonsäuren ins Urethan eingebracht werden.

Die als Bindemittel verwendbaren Polyurethane enthalten als Aufbaukomponenten im wesentlichen:
(a) mindestens ein organisches aliphatisches, aromatisches oder cycloaliphatisches Di- oder Polyisocyanat,
(b) mindestens eine Verbindung mit mindestens einer gegenüber Isocyanat reaktiven Gruppe und mindestens einer radikalisch polymerisierbaren ungesättigten Gruppe und
(c) gegebenenfalls mindestens eine Verbindung mit mindestens zwei gegenüber Iso-cyanat reaktiven Gruppen.

Als Komponente (a) kommen beispielsweise aliphatische, aromatische und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.
Es können auch Gemische der genannten Diisocyanate vorliegen.

Bevorzugt sind Hexamethylendiisocyanat, 1,3-Bis(isocyanatomethyl)cyclohexan, Isophorondiisocyanat und Di(isocyanatocyclohexyl)methan.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemische erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Uretonimin-modifizierte Polyisocyanate.

Die Polyisocyanate 1) bis 6) können im Gemisch, gegebenenfalls auch im Gemisch mit Diisocyanaten, eingesetzt werden.

Als Komponente (b) kommen Verbindungen in Betracht, die mindestens eine gegenüber Isocyanat reaktive Gruppe und mindestens eine radikalisch polymerisierbare Gruppe tragen.

Gegenüber Isocyanat reaktive Gruppen können z.B. sein -OH, -SH, -NH₂ und -NHR¹, wobei R¹ Wasserstoff oder eine 1 bis 4 Kohlenstoffatome enthaltende Alkylgruppe, wie z.B. Methyl, Ethyl, n-Propyl, *iso*-Propyl, n-Butyl, *iso-Butyl, sek*-Butyl oder *tert*-Butyl, bedeutet.

Komponenten (b) können z.B. Monoester von α,β-ungesättigten Carbonsäuren, wie Acrylsäure, Methacrylsäure, Crotonsäure, Itaconsäure, Fumarsäure, Maleinsäure, Acrylamidoglykolsäure, Methacrylamidoglykolsäure oder Vinylether mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen z. B. 2-Aminoethanol, 2-(Methylamino)ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin, oder Vinylessigsäure verwendet werden.

Weiterhin sind auch ungesättigte Polyether- oder Polyesterole oder Polyacrylatpolyole mit einer mittleren OH-Funktionalität von 2 bis 10 geeignet.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethylcrotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxypropyl(meth)acrylat, 1,4-Butandiolmono(meth)acrylat, Neopentylglykolmono(meth)acrylat, 1,5-Pentandiolmono(meth)acrylat, 1,6-Hexandiolmono(meth)acrylat, Glycerinmono- und di(meth)acrylat, Trimethylolpropanmono- und di(meth)acrylat, Pentaerythritmono-, -di- und -tri(meth)acrylat sowie 4-Hydroxybutylvinylether, 2-Amino-ethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Aminopropyl(meth)acrylamid, 3-Aminopro-pyl(meth)acrylamid, 2-Hydroxyethyl(meth)acrylamid, 2-Hydroxypropyl(meth)acrylamid oder 3-Hydroxypropyl(meth)acrylamid. Besonders bevorzugt sind 2-Hydroxy-ethylacrylat, 2-Hydroxyethylmethacrylat, 2- oder 3-Hydroxypropylacrylat, 1,4-Butandiolmonoacrylat und 3-(Acryloyloxy)-2-hydroxypropylmethacrylat.

Als Komponente (c) kommen Verbindungen in Betracht, die mindestens zwei gegenüber Isocyanat reaktive Gruppen, beispielsweise -OH, -SH, -NH₂ oder -NHR², worin R² darin unabhängig voneinander Wasserstoff, Methyl, Ethyl, *iso*-Propyl, n-Propyl, n-Butyl, *iso*-Butyl, *sek*-Butyl oder *tert-*Butyl bedeuten kann, aufweisen.

Dies sind bevorzugt Diole oder Polyole, wie 2 bis 20 Kohlenstoffatome aufweisende Kohlenwasserstoffdiole, z.B. Ethylenglycol, 1,2-Propandiol, 1,3-Propandiol, 1,1-Dimethylethan-1,2-diol, 1,6-Hexandiol, 1,10-Dekandiol, Bis-(4-hydroxycyclohexan) isopropyliden, Tetramethylcyclobutandiol, 1,2-, 1,3- oder 1,4-Cyclohexandiol, Cyclooctandiol, Norbornandiol, Pinandiol, Decalindiol, etc. deren Ester mit kurzkettigen Dicarbonsäuren, wie Adipinsäure, Cyclohexandicarbonsäure, deren Carbonate, hergestellt durch Reaktion der Diole mit Phosgen oder durch Umesterung mit Dialkyl- oder Diarylcarbonaten, oder aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclohexan-bis-(methylamin), etc., Dithiole oder mehrfunktionelle Alkohole, sekundäre oder primäre Aminoalkohole, wie Ethanolamin, Diethanolamin, Monopropanolamin, Dipropanolamin etc. oder Thioalkohole, wie Thioethylenglykol.

Weiterhin sind denkbar Diethylenglykol, Triethylenglykol, Dipropylenglykol, Tripropylenglykol, Neopentylglykol, Pentaerythrit, 1,2- und 1,4-Butandiol, 1,5-Pentandiol, 2-Methyl-1,5-pentandiol, 2-Ethyl-1,4-butandiol, 1,2-, 1,3- und 1,4-Dimethylolcyclohexan, 2,2-Bis(4-hydroxycyclohexyl)propan, Glycerin, Trimethylolethan, Trimethylolpropan, Trimethylolbutan, Dipentaerythrit, Ditrimethylolpropan, Erythrit und Sorbit, 2-Aminoethanol, 3-Amino-1-propanol, 1-Amino-2-propanol oder 2-(2-Aminoethoxy)ethanol, Bisphenol A, oder Butantriol.

Weiterhin sind auch ungesättigte Polyether- oder Polyesterole oder Polyacrylatpolyole mit einer mittleren OH-Funktionalität von 2 bis 10 geeignet, sowie Polyamine, wie z.B. Polyethylenimin oder freie Amingruppen enthaltende Polymere von z.B. Poly-N-vinylformamid.

Besonders geeignet sind hier die cycloaliphatischen Diole, wie z.B. Bis-(4-hydroxycyclohexan) isopropyliden, Tetramethylcyclobutandiol, 1,2-, 1,3- oder 1,4-Cyclohexandiol, Cyclooctandiol oder Norbornandiol.

Die erfindungsgemäß verwendbaren Polyurethane werden durch Reaktion der Komponenten (a), (b) und (c) miteinander erhalten.

Dabei ist die molare Zusammensetzung (a):(b):(c) pro 3 mol reaktive Isocycanatgruppen in (a) in der Regel wie folgt:
(b) 1,5 - 3,0, bevorzugt 1,5 - 2,5, besonders bevorzugt 1,5 - 2,0 und insbesondere 1,6-1,8 mol gegenüber Isocyanat reaktive Gruppen sowie
(c) 0 - 1,5, bevorzugt 0,5 - 1,5 besonders bevorzugt 0,7 - 1,5 und insbesondere 0,8 - 1,5 mol an gegenüber Isocyanat reaktiven Gruppen.

Bei Verwendung der Polyurethane in wäßrigen Systemen sind bevorzugt im wesentlichen alle vorhandenen Isocyanatgruppen abreagiert.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird die isocyanatgruppenhaltige Verbindung (a) vorgelegt und daraufhin (b) zugegeben. Nachfolgend können gegebenenfalls gewünschte weitere Komponenten zugegeben werden.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird dabei unter wasserfreien Bedingungen gearbeitet.

Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%.

Um eine Polymerisation der polymerisationsfähigen Doppelbindungen zurückzudrängen, wird bevorzugt unter einem suaerstoffhaltigen Gas gearbeitet, besonders bevorzugt Luft oder Luft-Stickstoff-Gemische.

Als sauerstoffhaltiges Gas können bevorzugt Luft oder ein Gemisch aus Sauerstoff oder Luft und einem unter den Einsatzbedingungen inerten Gas verwendet werden. Als inertes Gas können Stickstoff, Helium, Argon, Kohlenmonoxid, Kohlendioxid, Wasserdampf, niedere Kohlenwasserstoffe oder deren Gemische verwendet werden.

Der Sauerstoffgehalt des sauerstoffhaltigen Gases kann beispielsweise zwischen 0,1 und 22 Vol%, bevorzugt von 0,5 bis 20 betragen, besonders bevorzugt 1 bis 15, ganz besonders bevorzugt 2 bis 10 und insbesondere 4 bis 10 Vol%. Selbstverständlich können, falls gewünscht, auch höhere Sauerstoffgehalte eingesetzt werden.

Die Reaktion kann auch in Gegenwart eines inerten Solvens durchgeführt werden, z.B. Aceton, *Iso*-butyl-methylketon, Toluol, Xylol, Butylacetat oder Ethoxyethylacetat. Bevorzugt wird die Reaktion jedoch in Abwesenheit eines Solvens durchgeführt.

Die Urethan(meth)acrylate haben vorzugsweise ein zahlenmittleres Molgewicht Mₙ von 1000 bis 20 000, insbesondere von 1000 bis 10 000 besonders bevorzugt 1000 bis 4000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.
Die Urethanvinylether haben vorzugsweise einen Gehalt von 1 bis 5, besonders bevorzugt von 2 bis 4 Mol Vinylethergruppen pro 1000 g Urethanvinylether.

Es stellt eine bevorzugte Ausführungsform dieser Erfindung dar, daß die Urethan(meth)acrylate oder -vinylether, bevorzugt Urethanacrylate, als mindestens ein cycloaliphatisches Isocyanat, d.h. eine Verbindung, bei der mindestens eine Isocyanatgruppe an einen Cycloaliphaten gebunden ist, als Aufbaukomponente enthalten, besonders bevorzugt IPDI.

In einer weiteren bevorzugten Ausführungsform werden solche Verbindungen eingesetzt, wie in der WO 00/39183, S.4, Z. 3 bis S. 10, Z. 19 beschrieben, deren Offenbarung hiermit Bestandteil der vorliegenden Schrift sei. Besonders bevorzugt sind unter diesen solche Verbindungen, die als Aufbaukomponenten mindestens ein Allophanatgruppen aufweisendes, (cyclo)aliphatisches Isocyanat und mindestens ein Hydroxyalkyl(meth)acrylat aufweisen, ganz besonders bevorzugt die Produkt Nr. 1 bis 9 in Tabelle 1 auf S. 24 der WO 00/39183.

Weiterhin geeignete strahlungshärtbare Verbindungen sind Carbonat(meth)acrylate, die im Mittel vorzugsweise 1 bis 5, insbesondere 2 bis 4, besonders bevorzugt 2 bis 3 (Meth)acrylgruppen und ganz besonders bevorzugt 2(Meth)acrylgruppen enthalten.

Das zahlenmittlere Molekulargewicht Mₙ der Carbonat(meth)acrylate ist vorzugsweise 2000 bis 3000 g/mol (bestimmt durch Gelpermeationschromatgraphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Denkbar sind auch (Meth)acrylate oder Vinylether von Polycarbonatpolyolen, wie das Reaktionsprodukt aus einem der genannten Di- oder Polyole und einem Kohlensäureester sowie einem hydroxylgruppenhaltigen (Meth)acrylat oder Vinylether.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Geeignete hydroxygruppenhaltige Vinylether sind z.B. 2-Hydroxyethylvinylether und 4-Hydroxybutylvinylether.

Besonders bevorzugte Carbonat(meth)acrylate sind solche der Formel: 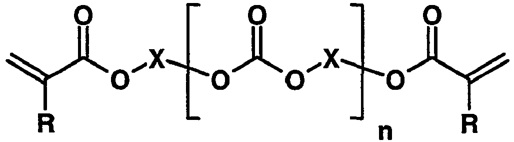 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich um aliphatische Carbonat(meth)acrylate.

Die Polymere i) als solche sind vor der UV-Härtung thermoplastisch verarbeitbar.

### zu ii)

Die ungesättigten Polymere i) können in Mischungen mit ethylenisch ungesättigten, niedermolekularen Verbindungen verwendet werden.

Als niedermolekulare Verbindungen werden in diesem Zusammenhang Verbindungen mit einem zahlenmittleren Molekulargewicht unter 2000 g/mol verstanden (bestimmt durch Gelpermeationschromatographie mit Polystyrol als Standard).

Dies können beispielsweise solche unter i) aufgeführten Verbindungen sein, die eine Molmasse von weniger als 2000 g/mol aufweisen, beispielsweise Epoxid(meth)acrylate mit einer Molmasse von 340, bevorzugt 500 und besonders bevorzugt 750 bis unter 2000 g/mol, Urethan(meth)acrylate) mit einer Molmasse von 300, bevorzugt 500 und besonders bevorzugt 750 bis unter 2000 g/mol oder Carbonat(meth)acrylate mit einer Molmasse von 170, bevorzugt 250 und besonders bevorzugt 500 bis unter 2000 g/mol.

In Betracht kommen ferner z.B. radikalisch polymerisierbare Verbindungen mit nur einer ethylenisch ungesättigten, copolymerisierbaren Gruppe.

Genannt seien z.B. C₁-C₂₀-Alkyl (meth) acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen und aliphatischen Kohlenwasserstoffen mit 2 bis 20, bevorzugt 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen z.B. Vinyltoluol, α-Butylstyrol, 4-n-Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexyl- und - octylether.

Als nicht aromatische Kohlenwasserstoffe mit 2 bis 20, bevorzugt 2 bis 8 C-Atomen und eine oder zwei olefinischen Doppelbindungen seien Butadien, Isopren, sowie Ethylen, Propylen und Isobutylen genannt.

In Betracht kommen bevorzugt, radikalisch polymerisierbare Verbindungen mit mehreren ethylenisch ungesättigten Gruppen.

Insbesondere handelt es sich hierbei um (Meth)acrylatverbindungen, bevorzugt sind jeweils die Acrylatverbindungen, d.h. die Derivate der Acrylsäure.

Bevorzugte (Meth)acrylat-Verbindungen enthalten 2 bis 20, bevorzugt 2 bis 10 und ganz besonders bevorzugt 2 bis 6 copolymerisierbare, ethylenisch ungesättigte Doppelbindungen.

Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Trimethylolethan, Neopentylglykol, Pentaerythrit, Glycerin, Ditrimethylolpropan, Dipentaerythrit, Sorbitol, Mannitol, Diglycerol, 1,2-Propandiol, Ethylenglykol, 2,2-Dimethyl-1,2-Ethandiol, Neopentylglykol, 1,3-Propandiol, 1,2-Butandiol, 1,4-Butandiol, Butantriol, Sorbit, Mannit und die entsprechenden alkoxylierten, insbesondere ethoxy- und propoxylierte Alkohole.

Die Alkoxylierungsprodukte sind in bekannter Weise durch Umsetzung der vorstehenden Alkohole mit Alkylenoxiden, beispielsweise Ethylenoxid, Propylenoxid, Butylenoxid, *iso*-Butylenoxid und Vinyloxiran in beliebiger Reihenfolge oder als Gemisch, bevorzugt Ethylen- und/oder Propylenoxid und besonders bevorzugt Ethylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.

Vinylethergruppenhaltige Polyetheralkohole werden beispielsweise entsprechend durch Umsetzung von Hydroxyalkylvinylethern mit Alkylenoxiden erhalten.

(Meth)acrylsäuregruppenhaltige Polyetheralkohole können beispielsweise durch Umesterung von (Meth)acrylsäureestern mit den Polyetheralkoholen, durch Veresterung der Polyetheralkohole mit (Meth)acrylsäure oder durch Einsatz von hydroxygruppenhaltigen (Meth)acrylaten wie oben unter (b) beschrieben erhalten werden.

Bevorzugte Poletheralkohole sind Polyethylenglykole mit einer Molmasse zwischen 106 und 2000, bevorzugt zwischen 106 und 898 besonders bevorzugt zwischen 238 und 678.

Weiterhin sind als Polyetheralkohole Poly-THF mit einer Molmasse zwischen 162 und 2000 sowie Poly-1,3-propandiol mit einer Molmasse zwischen 134 und 1178 einsetzbar.

Als (Meth)acrylatverbindungen seien weiterhin Polyester(meth)acrylate genannt, wobei es sich um die (Meth)Acrylsäureester von Polyesterolen handelt.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:

Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureänhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxy-cyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)₂-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyester(meth)acrylate können in mehreren Stufen oder auch einstufig, wie z.B. in EP 279 303 beschrieben, aus Acrylsäure, Polycarbonsäure, Polyol hergestellt werden.

### zu iii)

Als gesättigte thermoplastische Polymere geeignet sind z.B. Polymethylmethacrylat, Polystyrol, schlagfestes Polymethylmethacrylat, schlagfestes Polystyrol, Polycarbonat, Polyurethane.

Die Strahlenhärtbarkeit wird durch den Zusatz einer ethylenisch ungesättigten, strahlenhärtbaren Verbindung gewährleistet. Es kann sich dabei um eine der unter i) und/oder ii) aufgeführten Verbindungen handeln.

Die Bindemittel (bezogen auf den Feststoffgehalt, d.h. ohne Anwesenheit von Lösungsmittel) sind in der Regel wie folgt zusammengesetzt:
i) mindestens 20 Gew%, bevorzugt mindestens 30 Gew%, besonders bevorzugt mindestens 50, ganz besonders bevorzugt mindestens 60, insbesondere mindestens 75 und speziell mindestens 80 Gew% und bis zu 100 Gew%, bevorzugt bis zu 98 Gew%, besonders bevorzugt bis zu 95, ganz besonders bevorzugt bis zu 90 und insbesondere bis zu 85 Gew%,
ii) beispielsweise bis zu 70 Gew%, bevorzugt bis zu 50 Gew%, besonders bevorzugt bis zu 25 Gew%, ganz besonders bevorzugt bis zu 10, insbesondere bis zu 5 Gew% und speziell 0 Gew%
iii) beispielsweise bis zu 50 Gew%, bevorzugt bis zu 25 Gew%, besonders bevorzugt bis zu 10 Gew%, ganz besonders bevorzugt bis zu 5 Gew% und insbesondere 0 Gew%,
   mit der Maßgabe, daß die Summe immer 100 Gew% beträgt.

Wesentliches Merkmal des Bindemittels i) bis iii) ist, daß die Glasübergangstemperatur (T_{g}) des Bindemittels unterhalb von 50 °C, vorzugsweise unterhalb von 20 °C, besonders bevorzugt unterhalb von 10 °C liegt. Im allgemeinen unterschreitet die T_{g} nicht einen Wert von -60 °C. (Die Angaben beziehen sich auf das Bindemittel vor der Strahlungshärtung.)

Die Glasübergangstemperatur T_{g} des Bindemittels wird mit der DSC-Methode (Differential Scanning Calorimetry) gemäß ASTM 3418/82 bestimmen.

Die Menge der härtbaren d.h. ethylenisch ungesättigten Gruppen beträgt erfindungsgemäß mehr als 2 mol/kg, bevorzugt mehr als 2 mol/kg bis 8 mol/kg, besonders bevorzugt mindestens 2,1 mol/kg bis 6 mol/kg, ganz besonders bevorzugt 2,2 bis 6, insbesondere 2,3 bis 5 und speziell 2,5 bis 5 mol/kg des Bindemittels (fest), d.h. ohne Wasser oder sonstige Lösemittel.

Bevorzugt hat das Bindemittel (mit gegebenenfalls enthaltenem Lösungsmittel) eine Viskosität von 0,02 bis 100 Pas bei 25 °C (bestimmt im Rotationsviskosimeter)

In einer bevorzugten Ausgestaltung der vorliegenden Erfindung enthält die erfindungsgemäße strahlungshärtbare Masse nicht mehr als 10 Gew% an Verbindungen, die nur eine härtbare Gruppe aufweisen, bevorzugt nicht mehr als 7,5 Gew%, besonders bevorzugt nicht mehr als 5 Gew%, ganz besonders bevorzugt nicht mehr als 2,5 Gew%, insbesondere nicht mehr als 1 Gew% und speziell 0 Gew%. Der Einsatz von Verbindungen mit zwei- oder mehr härtbaren Gruppen führt in den erfindungsgemäßen strahlungshärtbaren Massen zu einer erhöhten Vernetzungsdichte, die zu positiven Lackeigenschaften wie Kratzfestigkeit, Härte und/oder Chemikalienbeständigkeit führt.

Die strahlungshärtbaren Massen können weitere Bestandteile enthalten. Genannt seien insbesondere Photoinitiatoren, Verlaufsmittel und Stabilisatoren. Bei Anwendungen im Außenbereich, d.h. für Beschichtungen, welche dem Tageslicht direkt ausgesetzt sind, enthalten die Massen insbesondere UV-Absorber und Radikalfänger.

Als Beschleuniger für die thermische Nachhärtung kann z.B. Zinnoctoat, Zinkoctoat, Dibutylzinnlaureat oder Diaza[2.2.2]bicyclooctan verwendet werden.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO der BASF AG), Ethyl-2,4,6-trimethylbenzoylphenylphosphinat (Lucirin^{®} TPO L der BASF AG), Bis-(2,4,6-trimethylbenzoyl)-phenylphosphinoxid (Irgacure® 819 der Firma Ciba Spezialitätenchemie), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Amino-benzophenon, 4'-Methoxyacetophenon, β-Methylanthrachinon, *tert*-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzoin-tetrahydropyranylether, Benzoin-methylether, Benzoin-ethylether, Benzoin-butylether, Benzoin-*iso*-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl)-2-morpholino-propan-1-on, Anthrachinone wie 2-Methylanthrachinon, 2-Ethylanthrachinon, 2-tert-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

UV Absorber wandeln UV-Strahlung in Wärmeenergie um. Bekannte UV-Absorber sind Hydroxybenzophenone, Benzotriazole, Zimtsäureester und Oxalanilide.

Radikalfänger binden intermedär gebildete Radikale. Bedeutende Radikalfänger sind sterisch gehinderte Amine, welche als HALS (Hindered Amine Light Stabilizers) bekannt sind.

Für Außenanwendungen beträgt der Gehalt an UV-Absorbern und Radikalfängern insgesamt vorzugsweise 0,1 bis 5 Gew.-Teile, besonders bevorzugt 0,5 bis 4 Gew.-Teile, bezogen auf 100 Gew.-Teile der strahlungshärtbaren Verbindungen.

Im übrigen kann die strahlungshärtbare Masse neben strahlungshärtbaren Verbindungen auch noch Verbindungen enthalten, die durch andere chemische Reaktionen zur Härtung beitragen. In Betracht kommen z.B. Polyisocyanate, welche mit Hydroxyl- oder Amingruppen vernetzen.

Die strahlungshärtbare Masse kann wasser- und lösemittelfrei, als Lösung oder als Dispersion vorliegen.

Bevorzugt sind wasser- und lösungsmittelfreie strahlungshärtbare Massen oder wäßrige Lösungen oder wäßrige Dispersionen.

Besonders bevorzugt sind wasser- und lösungsmittelfreie, strahlungshärtbare Massen.

Die strahlungshärtbare Masse ist thermoplastisch verformbar und kann extrudierbar sein.

Die vorstehenden strahlungshärtbaren Massen bilden die Deckschicht. Die Schichtdicke (nach Trocknung und Härtung) beträgt bevorzugt 10 bis 100 µm.

### Substratschicht

Die Substratschicht dient als Träger und soll eine dauerhaft hohe Zähigkeit des Gesamtverbundes gewährleisten.

Die Substratschicht besteht vorzugsweise aus einem thermoplastischen Polymer, insbesondere Polymethylmethacrylate, Polybutylmethacrylate, Polyethylenterephthalate, Polybutylenterephthalate, Polyvinylidenflouride, Polyvinylchloride, Polyester, Polyolefine, Acrylnitrilethylenpropylendienstryolcopolymere (A-EPDM), Polyetherimide, Polyetherketone, Polyphenylensulfide, Polyphenylenether oder deren Mischungen.

Weiterhin genannt seien Polyethylen, Polypropylen, Polystyrol, Polybutadien, Polyester, Polyamide, Polyether, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon.

Bevorzugt genannt seien ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone.

Besonders bevorzugte Substrate sind Polyolefine, wie z.B. PP(Polypropylen), das wahlweise isotaktisch, syndiotaktisch oder ataktisch und wahlweise nicht-orientiert oder durch uni- oder bisaxiales Recken orientiert sein kann, SAN (Styrol-AcrylnitrilCopolymere), PC (Polycarbonate), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC.

Ganz besonders bevorzugt ist ASA, insbesondere gemäß DE 19 651 350 und der Blend ASA/PC. Bevorzugt ist ebenfalls Polymethylmethacrylat (PMMA) oder schlagzähmodifiziertes PMMA.

Die Schichtdicke beträgt vorzugsweise 50 µm bis zu 5 mm. Besonders bevorzugt, vor allem, wenn die Substratschicht hinterspritzt wird, ist 100 bis 1000 µm, insbesondere 100 bis 500 µm.

Das Polymer der Substratschicht kann Additive enthalten. Insbesondere kommen Füllstoffe oder Fasern in Betracht. Die Substratschicht kann auch eingefärbt sein und so gleichzeitig als farbgebende Schicht dienen.

### Weitere Schichten

Die Folie kann neben der Deckschicht und der Substratschicht weitere Schichten enthalten.

In Betracht kommen z.B. farbgebende Zwischenschichten oder weiter Schichten aus thermoplastischem Material (thermoplastische Zwischenschichten), welche die Folie verstärken oder als Trennschichten dienen, wie es beispielsweise bekannt ist aus der WO 2004/009251.

Thermoplastische Zwischenschichten können aus den oben unter Substratschicht aufgeführten Polymeren bestehen.

Bevorzugt ist insbesondere Polymethylmethacrylat (PMMA), vorzugsweise schlagzähmodifiziertes PMMA. Genannt sei auch Polyurethan.
Farbgebende Schichten können ebenfalls aus den genannten Polymeren bestehen. Sie enthalten Farbstoffe oder Pigmente welche in der Polymerschicht verteilt sind.

Eine bevorzugte Folie hat z.B. folgenden Schichtaufbau, wobei die alphabetische Reihenfolge der räumlichen Anordnung entspricht:
A) Deckschicht
B) thermoplastische Zwischenschicht (optional)
C) farbgebende Zwischenschicht (optional)
D) Substratschicht
E) Klebstoffschicht (optional)

Auf der rückwertigen Seite (kurz Rückseite) der Substratschicht (d.h. der dem zu beschichtenden Objekt zugewandten Seite) kann eine Klebstoffschicht aufgebracht sein, falls die Folie auf das Substrat geklebt werden soll.

Auf der transparenten Deckschicht kann eine Schutzschicht, z.B. eine Abziehfolie, die ein unbeabsichtigtes Aushärten verhindert, aufgebracht sein. Die Dicke kann z.B. 50 bis 100 µm betragen. Die Schutzschicht kann z.B. aus Polyethylen oder Polytherephthalat bestehen. Vor der Bestrahlung kann die Schutzschicht entfernt werden.

Die Bestrahlung kann aber auch durch die Schutzschicht erfolgen, dazu muß die Schutzschicht im Wellenlängenbereich der Bestrahlung transparent sein.

Die Gesamtdicke der Folie beträgt vorzugsweise 50 bis 1000 µm.

### Herstellung der Verbundplatte oder -folie

Die Herstellung eines Verbundes aus den Schichten B) bis D) kann z.B. durch Coextrusion aller oder einiger der Schichten erfolgen.

Zur Coextrusion werden die einzelnen Komponenten in Extrudern fließfähig gemacht und über spezielle Vorrichtungen so miteinander in Kontakt gebracht, daß die Folien mit der vorstehend beschriebenen Schichtfolge resultieren. Beispielsweise können die Komponenten durch eine Breitschlitzdüse coextrudiert werden. Dieses Verfahren ist in der EP-A2-0 225 500 erläutert. In Ergänzung zu den dort beschriebenen Verfahren kann auch die sogenannte Adapter-Coextrusion eingesetzt werden.

Der Verbund kann nach üblichen Verfahren, z.B. durch Coextrusion, wie vorstehend beschrieben, oder durch Kaschierung der Schichten, z.B. in einem beheizbaren Spalt, hergestellt werden. Zunächst kann so ein Verbund aus den Schichten mit Ausnahme der Deckschicht hergestellt und danach die Deckschicht nach üblichen Verfahren aufgebracht werden.

Bei der Extrusion (eingeschlossen Coextrusion) der strahlungshärtbaren Massen kann die Herstellung der strahlungshärtbaren Masse durch Mischen der Bestandteile und die Herstellung der Deckschicht in einem Arbeitsgang erfolgen.

Dazu können thermoplastische Bestandteile, z.B. ungesättigte Polymere i) der gesättigte Polymere unter iii) (siehe oben) im Extruder zunächst aufgeschmolzen werden. Die notwendige Schmelztemperatur hängt vom jeweiligen Polymeren ab. Vorzugsweise nach dem Aufschmelzvorgang können die weiteren Bestandteile, insbesondere strahlungshärtbare, niedermolekulare Verbindungen ii) (siehe oben) zudosiert werden. Die Verbindungen wirken als Weichmacher, so daß sich die Temperatur, bei der die Masse als Schmelze vorliegt, absenkt. Die Temperatur bei Zugabe der strahlungshärtbaren Verbindung muß insbesondere unter einer sogenannten kritischen Temperatur liegen, bei der eine thermische Härtung der strahlungshärtbaren Verbindung erfolgt.
Die kritische Temperatur läßt sich leicht durch eine kalorimetrische Messung, d.h. der Wärmeaufnahme mit steigender Temperatur entsprechend der oben beschriebenen Bestimmung der Glasübergangstemperatur ermitteln.

Die strahlungshärtbare Masse wird dann direkt als Deckschicht auf den vorhandenen Verbund oder, im Falle der Coextrusion, mit Schichten des Verbundes extrudiert. Durch die Extrusion wird die Verbundschichtplatte oder -folie unmittelbar erhalten.

Die strahlungshärtbare Masse kann bevorzugt in einfacher Weise z.B. durch Spritzen, Spachteln, Rakeln, Bürsten, Rollen, Walzen, Gießen, Laminieren etc. auf die Substratschicht bzw. den Verbund aufgetragen werden und gegebenenfalls getrocknet werden.

Die Deckschicht ist blockfest, d.h. klebt nicht, und ist strahlenvernetzbar. Die Verbundplatte oder -folie ist thermoelastisch verformbar. Falls gewünscht kann direkt nach der Herstellung der Verbundplatte oder -folie eine Schutzschicht (Schutzfolie) auf die Deckschicht abgelegt werden.

Die Verbundschichtplatte oder -folie hat einen hohen Glanz und gute mechanische Eigenschaften. Rißbildung ist kaum,zu beobachten.

Die Dehnungsfähigkeit der Verbundschichtplatte oder -folie beträgt vorzugsweise mindestens 100 %, bezogen auf den nicht gedehnten Zustand (bei 140°C, einer Dicke von 30 µm.

### Verwendungsverfahren

Die Folie kann ohne Teilhärtung (wie in EP-A2 819 516 beschrieben ist) bis zur späteren Anwendung gelagert werden.

Eine Verklebung oder Verschlechterung der anwendungstechnischen Eigenschaften bis zur späteren Anwendung ist nicht oder kaum zu beobachten.
Die Folie wird bevorzugt als Beschichtungsmittel verwendet.

Vorzugsweise erfolgt dabei zunächst die Beschichtung der Substrate und danach die Härtung der Deckschicht durch Strahlung.

Die Beschichtung kann durch Aufkleben der Folie auf die Substrate erfolgen. Die Folie ist dazu auf der Rückseite der Substratschicht vorzugsweise mit der Klebstoffschicht E versehen. Als Substrate eignen sich solche aus Holz, Kunststoff, Metall.

Die Beschichtung kann auch durch Hinterspritzen der Folie erfolgen. Dazu wird die Folie vorzugsweise in einem Tiefziehwerkzeug tiefgezogen und die Rückseite der Substratschicht mit Kunststoffmasse hinterspritzt. Bei der Kunststoffmasse handelt es sich z.B. um Polymere, welche oben bei der Beschreibung der Substratschicht aufgeführt wurden oder z.B. um Polyurethan, insbesondere Polyurethanschaum. Die Polymeren können Additive, insbesondere z.B. Fasern, wie Glasfasern oder Füllstoffe enthalten.

Die Strahlungshärtung der Deckschicht erfolgt dabei vorzugsweise nach dem Tiefziehvorgang und besonders bevorzugt nach dem Hinterspritzten der Folie.

Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der T_{g} des strahlungshärtbaren Bindemittels.

Strahlungshärtung heißt hier die radikalische Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Neben einer Strahlungshärtung können noch weitere Härtungsmechanismen involviert sein, beispielsweise thermische-, Feuchtigkeits-, chemische und/oder oxidative Härtung.

Die Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren ein- oder mehrfach appliziert werden.

Die Beschichtungsstärke liegt in der Regel in einem Bereich von etwa 3 bis 1000 g/m² und vorzugsweise 10 bis 200 g/m².

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Weiterhin wird ein Verfahren zum Beschichten von Substraten offenbart, bei dem man die erfindungsgemäße Beschichutngsmasse oder solche enthaltende Lackformulierungen, gegebenenfalls mit thermisch härtbaren Harzen versetzt, auf das Substrat aufbringt, trocknet, und anschließend mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur.

Das Verfahren zum Beschichten von Substraten kann auch so durchgeführt werden, daß nach dem Aufbringen der erfindungsgemäßen Beschichtungsmasse oder Lackformulierungen zunächst mit Elektronenstrahlen oder UV Belichtung unter Sauerstoff oder bevorzugt unter Inertgas bestrahlt wird, um eine Vorhärtung zu erzielen, anschließend bei Temperaturen bis zu 160°C, bevorzugt zwischen 60 und 160°C, thermisch behandelt und anschließend mit Elektronenstrahlen oder UV Belichtung unter Sauerstoff oder bevorzugt unter Inertgas endhärtet.

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (E-lektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Soweit auch Vernetzer enthalten sind, die eine zusätzliche thermische Vernetzung bewirken, z.B. Isocyanate, kann z.B. gleichzeitig oder auch nach der Strahlungshärtung die thermische Vernetzung durch Temperaturerhöhung auf bis zu 150°C, vorzugsweise bis zu 130°C durchgeführt werden.

### Anwendungsgebiete und Vorteile

Die Folien können zur Beschichtung von Formkörpern verwendet werden. Dabei sind beliebige Formkörper zugänglich. Besonders bevorzugt werden die Folien zur Beschichtung von Formkörpern verwendet, bei denen es auf sehr gute Oberflächeneigenschaften, eine hohe Witterungsbeständigkeit sowie gute UV-Beständigkeit ankommt. Die erhaltenen Oberflächen sind zudem sehr kratzfest und haftfest, so daß eine Zerstörung der Oberflächen durch Zerkratzen oder Ablösen der Oberflächen zuverlässig verhindert wird. Somit sind Formkörper zur Verwendung im Außenbereich außerhalb von Gebäuden ein bevorzugtes Anwendungsgebiet. Insbesondere werden die Folien zur Beschichtung von Kraftfahrzeugteilen, eingesetzt, z.B. kommen Kotflügel, Türverkleidungen, Stoßstangen, Spoiler, Schürzen, wie auch Außenspiegel in Betracht.

Es stellt einen Vorteil der vorliegenden Erfindung dar, dass die erfindungsgemäßen Beschichtungsmassen je nach Zusammensetzung eine hohe Härte bei gleichzeitig hoher Elastizität aufweisen, was derartige Beschichtungsmassen besonders geeignet für Lackierungen macht, die starken Belastungen ausgesetzt sind und die dennoch nicht abplatzen dürfen. Beispiele dafür sind Lackierungen an Stoßfängern, Spoilern oder Türschwellern.

Andere erfindungsgemäße Zusammensetzungen weisen eine außergewöhnliche hohe Härte bei akzeptabler Elastizität auf, die sie besonders geeignet machen für großflächige, gering belastete Lackierungen, wie beispielsweise bei Autodächern, Motorhauben oder Türen.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Beispiele

Es wurden folgende Verbindungen eingesetzt:
Isocyanurat (Basonat® HI 100 der Fa. BASF): Polyisocyanat (Isocyanurat) auf Basis von Hexamethylendiisocyanat mit einem NCO-Gehalt gemäß DIN EN ISO 11909 von 21,5-22,5 %
Biuret (Basonat® HB 100 der Fa. BASF): Polyisocyanat (Biuret) auf Basis von Hexamethylendiisocyanat mit einem NCO-Gehalt gemäß DIN EN 11909 von 22 - 23 %
Isocyanurat (Vestanat® T 1890 der Fa. Degussa): Polyisocyanat (Isocyanurat) auf Basis von Isophorondiisocyanat mit einem NCO-Gehalt gemäß DIN EN ISO 11909 von 11,7 -12,3 %
Lupraphen® VP 9327: Polyesterol der BASF AG aus Adipinsäure / Cyclohexandimethanol / Isophthalsäure mit einer durchschnittlichen Molmasse von 800 g/mol Pentaerythrit tri- und -tetraacrylatgemisch, Handelsprodukt der Firma UCB, OH-Zahl 103 mg KOH/g
Allophanat aus Hexamethylendiisocyanat und Hydroxyethylacrylat beschrieben in WO 00/39183 S. 24 Tabelle 1.

### Beispiel 1

Bis-(4-hydroxycyclohexan)-isopropyliden und Lupraphen® VP 9327 wurde in Hydroxyethylacrylat und Pentaerythrit-tri/tetra-acrylat bei 60°C unter Rühren grob dispergiert. Zu dieser Suspension wurden die Isocyanate, Hydrochinonmonomethylether, 1,6-di-tert-Butyl-para-Kresol und Butylacetat gegeben. Nach der Zugabe von Dibutylzinndilaurat erwärmte sich der Ansatz. Bei Innentemperatur 75°C wurde mehrere Stunden gerührt bis sich der NCO-Wert der Reaktionsmischung praktisch nicht mehr veränderte. Dann erfolgte die Zugabe von Methanol bis ein NCO-Wert von 0% erreicht wurde.

Die Zusammensetzung war wie folgt:

| | |
|---|---|
| Bis-(4-hydroxycyclohexan)-isopropyliden | 94,88 g (30 mol% OH) |
| Lupraphen® VP 9327 | 105,50 g (10 mol% OH) |
| Hydroxyethylacrylat | 79,75 g (27,5 mol% OH) |
| Pentaerythrit-tri/tetra-acrylat | 389,13 g (27,5 mol% OH) |
| Isocyanurat (Basis HDI) | 262,08 g (55 mol% NCO) |
| Isocyanurat (Basis IPDI) | 273,15 g (45 mol% NCO) |
| Hydrochinonmonomethylether | 0,602 g (0,05 % auf fest) |
| 1,6-di-tert-Butyl-para-Kresol | 1,204 g (0,1 % auf fest) |
| Butylacetat | 516,21 g (70 % Festkörper) |
| Dibutylzinndilaurat | 0,241 g (0,02 % auf fest) |
| Methanol | 10,65 g (5 mol% OH) |

### Eigenschaften des ungehärteten Bindemittels:

Tg =18,3°C, η = 40-50 Pa·s/RT, Doppelbindungsdichte = 2,56 mol/kg (100 %ig)

### Eigenschaften des gehärteten Klarlacks:

Relativer Restglanz 57,40 % nach AMTEC-Kistler Testmethode

### Beispiel 2

Bis-(4-hydroxycyclohexan)-isopropyliden wurde in Hydroxyethylacrylat und Pentaerythrit-tri/tetra-acrylat bei 60°C unter Rühren grob dispergiert. Zu dieser Suspension wurden die Isocyanate, Hydrochinonmonomethylether, 1,6-di-tert-Butyl-para-Kresol und Butylacetat gegeben. Nach der Zugabe von Dibutylzinndilaurat erwärmte sich der Ansatz. Bei Innentemperatur 75°C wurde mehrere Stunden gerührt bis sich der NCO-Wert der Reaktionsmischung praktisch nicht mehr veränderte. Dann erfolgte die Zugabe von Methanol bis ein NCO-Wert von 0% erreicht wurde.

| | |
|---|---|
| Bis-(4-hydroxycyclohexan)-isopropyliden | 63,25 g (40 mol% OH) |
| Hydroxyethylacrylat | 39,88 g (27,5 mol% OH) |
| Pentaerythrit-tri/tetra-acrylat | 194,81 g (27,5 mol% OH) |
| Isocyanurat (Basis HDI) | 89,34 g (37,5 mol% NCO) |
| Biuret (Basis HDI) | 92,87 g (37,5 mol% NCO) |
| Isocyanurat (Basis IPDI) | 75,88 g (25 mol% NCO) |
| Hydrochinonmonomethylether | 0,278 g (0,05 % auf fest) |
| 1,6-di-tert-Butyl-para-Kresol | 0,556 g (0,1 % auf fest) |
| Butylacetat | 238,30 g (70 % Festkörper) |
| Dibutylzinndilaurat | 0,222 g (0,04 % auf fest) |
| Methanol | 4,46 g (5 mol% OH) |

### Eigenschaften des ungehärteten Bindemittels:

T_{g} = 13,2°C, η = 47 Pa·s/RT, Doppelbindungsdichte = 2,8 mol/kg (100 %ig)

### Eigenschaften des gehärteten Klarlacks:

Relativer Restglanz 57,00 % nach AMTEC-Kistler Testmethode

### Beispiel 3

Bis-(4-hydroxycyclohexan)-isopropyliden wurde in Hydroxyethylacrylat und Pentaerythrit-tri/tetra-acrylat bei 60°C unter Rühren grob dispergiert. Zu dieser Suspension wurden die Isocyanate, Hydrochinonmonomethylether, 1,6-di-tert-Butyl-para-Kresol und Butylacetat gegeben. Nach der Zugabe von Dibutylzinndilaurat erwärmte sich der Ansatz. Bei Innentemperatur 75°C wurde mehrere Stunden gerührt bis sich der NCO-Wert der Reaktionsmischung praktisch nicht mehr veränderte. Dann erfolgte die Zugabe von Methanol bis ein NCO-Wert von 0% erreicht wurde.

| | |
|---|---|
| Bis-(4-hydroxycyclohexan)-isopropyliden | 40 mol% OH |
| Hydroxyethylacrylat | 27,5 mol% OH |
| Pentaerythrit-tri/tetra-acrylat | 27,5 mol% OH |
| Allophanat aus HDI und HEA | 55 mol% NCO |
| Isocyanurat (Basis IPDI) | 45 mol% NCO |
| Hydrochinonmonomethylether | 0,05 % auf fest |
| 1,6-di-tert-Butyl-para-Kresol | 0,1 % auf fest |
| Butylacetat | 70 % Festkörper |
| Dibutylzinndilaurat | 0,04 % auf fest |
| Methanol | 5 mol% OH |

### Eigenschaften des ungehärteten Bindemittels:

Tg =11,3°C, η = 6,6 Pa·s/RT, Doppelbindungsdichte (theoretisch) = 4,41 mol/kg (100 %ig)
Doppelbindungsdichte (theoretisch) = 4,41 mol/kg (100 %ig)
Doppelbindungsdichte (Hydrieriodzahl) = 77 g lod/ 100 g (entspricht 3,03 mol/kg (70 %ig),
also 4,33 mol/kg (100 %ig)).

Zur Bestimmung der Hydrieriodzahl wurde eine Probe in Eisessig gelöst und bei 30°C und auf BaSO₄ geträgertem Palladium hydriert. Aus der Wasserstoffaufnahme wird die Iodzahl und die Doppelbindungsdichte berechnet.

### Eigenschaften des gehärteten Klarlacks:

Relativer Restglanz 52,6 % nach AMTEC-Kistler Testmethode

### Vergleichsbeispiel

Das Beispiel I aus WO 00/63015 wurde nachgestellt und der relative Restglanzwert bestimmt.

Es wurden nicht mehr als 35 % gemessen.

### Anwendungsbeispiele

Bestimmung der anwendungstechnischen Eigenschaften Pendeldämpfung, Erichsen Tiefung und Kratzfestigkeit.

Die Bestimmung der Pendeldämpfung erfolgte analog DIN 53157. Hierzu wurden die strahlungshärtbaren Zusammensetzungen mit einer Nassfilmdicke von 400 µm auf Glas aufgebracht. Die Nassfilme wurden zunächst 15 Minuten bei Raumtemperatur abgelüftet und anschließend 20 Minuten bei 100°C getrocknet. Die Aushärtung der auf diese Weise erhaltenen Filme erfolgte an einer IST-Beschichtungsanlage (Typ M 40 2x1-R-IR-SLC-So inert) mit 2 UV-Strahlern (Quecksilberhochdrucklampen Typ M 400 U2H und Typ M 400 U2HC) und einer Förderbandgeschwindigkeit von 10 m/min unter Stickstoffatmosphäre (O₂≤500 ppm). Die Strahlendosis betrug ca. 1900 mJ/cm². Die Pendeldämpfung ist ein Maß für die Härte der Beschichtung. Hohe Werte bedeuten dabei hohe Härte.

Die Ermittlung der Erichsen-Tiefung erfolgte analog DIN 53156. Hierzu wurde mittels eines Kastenrakels die jeweilige erfindungsgemäße Zubereitung mit einer Nassfilmdicke von 200 µm auf BONDER-Blech 132 aufgebracht. Zur Aushärtung wurde in der oben beschriebenen Weise belichtet. Anschließend wurde die Erichsen-Tiefung durch Eindrücken einer Metallkugel in die nicht beschichtete Seite des Blechs bestimmt. Die Erichsen-Tiefung ist ein Maß für die Flexibilität und Elastizität. Die Angabe erfolgt in Millimeter (mm). Hohe Werte bedeuten hohe Flexibilität.

Die Bestimmung der Kratzfestigkeit erfolgte mit dem Scotch-Brite-Test nach Lagerung für 7 Tage im Klimaraum. Im Scotch-Brite-Test wird als Prüfkörper ein 3 x 3 cm großer Siliciumcarbid modifizierter Faservlies (Scotch Brite SUFN, Firma 3M) an einem Zylinder befestigt. Dieser drückt das Faservlies mit 250 g an die Beschichtung und wird pneumatisch über die Beschichtung bewegt. Die Wegstrecke der Auslenkung beträgt 7 cm. Nach 10 bzw. 50 Doppelhüben (DH) wird im mittleren Bereich der Beanspruchung der Glanz (Achtfachbestimmung) analogh DIN 67530 bei einem Einfallwinkel von 20° gemessen. Der Restglanzwert in Prozent ergibt sich aus dem Verhältnis Glanz nach Belastung gegenüber Anfangsglanz. Nach 50 Doppelhüben wird mit einem weichen Tuch, das mit Waschbenzin getränkt ist zweimal leicht abgewischt und nochmals der Restglanz gemessen.

Die Herstellung der strahlungshärtbaren Masse erfolgt durch intensive Mischung von 100 Gewichtsteilen der unter Beispiel 1 bis 3 erhaltenen Urethanacrylaten mit 4 Gewichtsteilen Irgacure® 184 der Firma Ciba Spezialitätenchemie (handelsüblicher Photoinitiator). Als Vergleich diente Beispiel I aus WO 00/63015.

| Beispiel | Pendeldämpfung [s] | Erichsen-Tiefung [mm] | |
|---|---|---|---|
| 1 | 193 | 2,0 | |
| 2 | 177 | 4,0 | |
| 3 | 180 | 0,9 | |
| Vergleichsbeispiel | 166 | 3,3 | |

| Beispiel | Restglanz [%] Nach 10 DH | Restglanz [%] Nach 50 DH | Restglanz [%] nach Waschbenzin |
|---|---|---|---|
| 1 | 89,2 | 79,1 | 82,0 |
| 2 | 88,7 | 82,0 | 83,6 |
| 3 | 94,8 | 83,3 | 83,8 |
| Vergleichsbeispiel | 78,1 | 59,6 | 60,8 |

## Patentansprüche

1. Verwendung einer strahlungshärtbaren Verbundschichtplatte oder -folie aus mindestens einer Substratschicht und einer Deckschicht zur Beschichtung von Formteilen, **dadurch gekennzeichnet, daß** die Deckschicht aus einer strahlungshärtbaren Masse besteht, die ein Bindemittel mit einer Glasübergangstemperatur unterhalb von 50 °C und einem Anteil an ethylenisch ungesättigten Gruppen von mehr als 2 mol/kg Bindemittel enthält.

2. Verwendung einer strahlungshärtbaren Verbundschichtplatte oder -folie gemäß Anspruch 1, wobei die Deckschicht transparent ist.

3. Verwendung einer strahlungshärtbaren Verbundschichtplatte oder -folie gemäß Anspruch 1 oder 2, wobei das Bindemittel mindestens ein Urethan(meth)acrylat enthält, das als Aufbaukomponente mindestens ein cycloaliphatisches Isocyanat enthält.

4. Verwendung nach Anspruch 1 oder 2, wobei das Bindemittel mindestens ein Urethan(meth)acrylat enthält, das als Aufbaukomponente Isophorondiisocyanat oder Hexamethylendiisocyanat enthält.

5. Verwendung einer strahlungshärtbaren Verbundschichtplatte oder -folie gemäß einem der vorstehenden Ansprüche, wobei sich zwischen der Substratschicht und der Deckschicht noch eine farbgebende Zwischenschicht befindet.

6. Verwendung einer strahlungshärtbaren Verbundschichtplatte oder -folie gemäß einem der vorstehenden Ansprüche, wobei sich zwischen der farbgebenden Zwischenschicht und der Deckschicht noch eine Schicht aus Polymethylmethacrylate, Polybutylmethacrylate, Polyethylenterephthalate, Polybutylenterephthalate, Polyvinylidenflouride, Polyvinylchloride, Polyester, Polyolefine, Acrylnitrilethylenpropylendienstryolcopolymere (A-EPDM), Polyetherimide, Polyetherketone, Polyphenylensulfide, Polyphenylenether oder deren Mischungen befindet.

7. Verwendung einer strahlungshärtbaren Verbundschichtplatte oder -folie gemäß einem der vorstehenden Ansprüche, wobei die strahlungshärtbare Masse Polymere mit ethylenisch ungesättigen Gruppen mit einer Molmasse von mehr als 2000 g/mol, gegebenenfalls im Gemisch mit davon unterschiedlichen, ethylenisch ungesättigten, niedermolekularen Verbindungen mit einer Molmasse von weniger als 2000 g/mol und/oder Mischungen von gesättigten, thermoplastischen Polymeren mit ethylenisch ungesättigten Verbindungen enthält.

8. Verwendung einer strahlungshärtbaren Verbundschichtplatte oder -folie gemäß einem der vorstehenden Ansprüche, wobei es sich bei der Substratschicht um eine Schicht aus thermoplastischen Polymeren, insbesondere Polymethylmethacrylate, Polybutylmethacrylate, Polyurethane, Polyethylenterephthalate, Polybutylenterephthalate, Polyvinylidenfluride, Polyvinylchloride, Polyester, Polyolefine, Polyamide, Polycarbonate, Acrylnitrilbutadienstyrolpolymere (ABS), Acrylstryolacrylnitrilcopolymere (ASA), Acrylnitrilethylenpropylendienstryolcopolymere (A-EPDM), Polyetherimide, Polyetherketone, Polyphenylensulfide, Polyphenylenether oder deren Mischungen handelt.

9. Verwendung nach einem der vorstehenden Ansprüche, **dadurch gekennzeichnet, daß** die strahlungshärtbare Masse nicht mehr als 10 Gew% an Verbindungen enthält, die nur eine härtbare Gruppe aufweisen.

10. Verfahren zur Herstellung von beschichteten Formteilen, insbesondere Kraftfahrzeugteilen, **dadurch gekennzeichnet, dass** eine strahlungshärtbare Verbundschichtplatte oder -folie aus mindestens einer Substratschicht und einer Deckschicht, wobei die Deckschicht aus einer strahlungshärtbaren Masse besteht, die ein Bindemittel mit einer Glasübergangstemperatur unterhalb von 50 °C und einem Anteil an ethylenisch ungesättigten Gruppen von mehr als 2 mol/kg Bindemittel enthält, auf die Formteile aufgeklebt wird und danach die Deckschicht durch Strahlung gehärtet wird,

11. Verfahren zur Herstellung von beschichteten Formteilen aus Kunststoff, insbesondere Kraftfahrzeugteilen, **dadurch gekennzeichnet, dass** eine strahlungshärtbare Verbundschichtplatte oder -folie aus mindestens einer Substratschicht und einer Deckschicht, wobei die Deckschicht aus einer strahlungshärtbaren Masse besteht, die ein Bindemittel mit einer Glasübergangstemperatur unterhalb von 50 °C und einem Anteil an ethylenisch ungesättigten Gruppen von mehr als 2 mol/kg Bindemittel enthält, in einem Tiefziehwerkzeug tiefgezogen und die Rückseite der Substratschicht mit der Kunststoffmasse hinterspritzt wird, wobei die Strahlungshärtung der Deckschicht nach dem Tiefziehvorgang oder nach dem Hinterspritzen erfolgt.

12. Beschichtete Formteile, erhältlich nach einem Verfahren gemäß Anspruch 10 oder 11.

13. Strahlungshärtbare Verbundschichtplatte oder -folie aus mindestens einer Substratschicht und einer Deckschicht bestehend aus einer strahlungshärtbaren Masse, die ein Bindemittel mit einer Glasübergangstemperatur unterhalb von 50 °C und einem Anteil an ethylenisch ungesättigten Gruppen von mehr als 2 mol/kg Bindemittel enthält, **dadurch gekennzeichnet, dass** sich zwischen der Substratschicht und der Deckschicht noch eine farbgebende Zwischenschicht befindet.

14. Strahlungshärtbare Verbundschichtplatte oder -folie gemäß Anspruch 13, wobei sich zwischen der farbgebenden Zwischenschicht und der Deckschicht noch eine Schicht aus Polymethylmethacrylate, Polybutylmethacrylate, Polyethylenterephthalate, Polybutylenterephthalate, Polyvinylidenflouride, Polyvinylchloride, Polyester, Polyolefine, Acrylnitrilethylenpropylendienstryolcopolymere (A-EPDM), Polyetherimide, Polyetherketone, Polyphenylensulfide, Polyphenylenether oder deren Mischungen befindet.

15. Strahlungshärtbare Verbundschichtplatte oder -folie gemäß einem der Ansprüche 13 oder 14, wobei die strahlungshärtbare Masse Polymere mit ethylenisch ungesättigen Gruppen mit einer Molmasse von mehr als 2000 g/mol, gegebenenfalls im Gemisch mit davon unterschiedlichen, ethylenisch ungesättigten, niedermolekularen Verbindungen mit einer Molmasse von weniger als 2000 g/mol und/oder Mischungen von gesättigten, thermoplastischen Polymeren mit ethylenisch ungesättigten Verbindungen enthält.

16. Strahlungshärtbare Verbundschichtplatte oder -folie gemäß einem der Ansprüche 13 bis 15, **dadurch gekennzeichnet, daß** die strahlungshärtbare Masse nicht mehr als 10 Gew% an Verbindungen enthält, die nur eine härtbare Gruppe aufweisen.

17. Strahlungshärtbare Verbundschichtplatte oder -folie gemäß einem der Ansprüche 13 bis 16, wobei das Bindemittel mindestens ein Urethan(meth)acrylat enthält, das als Aufbaukomponente mindestens ein cycloaliphatisches Isocyanat enthält.

18. Strahlungshärtbare Verbundschichtplatte oder -folie gemäß einem der Ansprüche 13 bis 16, wobei das Bindemittel mindestens ein Urethan(meth)acrylat enthält, das als Aufbaukomponente Isophorondiisocyanat oder Hexamethylendiisocyanat enthält.

## Claims

1. The use of a radiation-curable laminated sheet or film comprising at least one substrate layer and a top layer for lamination of shaped articles, wherein the top layer consists of radiation-curable material which comprises a binder having a glass transition temperature below 50°C and a content of ethylenically unsaturated groups of more than 2 mol/kg of binder.

2. The use of a radiation-curable laminated sheet or film according to claim 1, the top layer being transparent.

3. The use of a radiation-curable laminated sheet or film according to claim 1 or 2, the binder comprising at least one urethane (meth)acrylate which comprises at least one cycloaliphatic isocyanate as a component.

4. The use according to claim 1 or 2, the binder comprising at least one urethane (meth)acrylate which comprises isophorone diisocyanate or hexamethylene diisocyanate as a component.

5. The use of a radiation-curable laminated sheet or film according to any of the preceding claims, a color-imparting intermediate layer also being present between the substrate layer and the top layer.

6. The use of a radiation-curable laminated sheet or film according to any of the preceding claims, a layer of polymethyl methacrylates, polybutyl methacrylates, polyethylene terephthalates, polybutylene terephthalates, polyvinylidene fluorides, polyvinyl chlorides, polyesters, polyolefins, acrylonitrile-ethylene-propylenediene-styrene copolymers (A-EPDM), polyetherimides, polyetherketones, polyphenylene sulfides, polyphenyl ethers or mixtures thereof also being present between the color-imparting intermediate layer and the top layer.

7. The use of a radiation-curable laminated sheet or film according to any of the preceding claims, the radiation-curable material comprising polymers having ethylenically unsaturated groups and having a molar mass of more than 2000 g/mol, optionally as a mixture with ethylenically unsaturated, low molecular weight compounds differing therefrom and having a molar mass of less than 2000 g/mol and/or mixtures of saturated, thermoplastic polymers with ethylenically unsaturated compounds.

8. The use of a radiation-curable laminated sheet or film according to any of the preceding claims, the substrate layer being a layer of thermoplastic polymers, in particular polymethyl methacrylates, polybutyl methacrylates, polyurethanes, polyethylene terephthalates, polybutylene terephthalates, polyvinylidene fluorides, polyvinyl chlorides, polyesters, polyolefins, polyamides, polycarbonates, acrylonitrile-butadiene-styrene polymers (ABS), acrylate-styrene-acrylonitrile copolymers (ASA), acrylonitrile-ethylene-propylene-diene-styrene copolymers (A-EPDM), polyetherimides, polyetherketones, polyphenylene sulfides, polyphenylene ethers or mixtures thereof.

9. The use according to any of the preceding claims, wherein the radiation-curable material comprises not more than 10% by weight of compounds which have only one curable group.

10. A process for the production of laminated shaped articles, in particular automotive parts, wherein a radiation-curable laminated sheet or film comprising at least one substrate layer and a top layer, the top layer consisting of radiation-curable material which comprises a binder having a glass transition temperature below 50°C and a content of ethylenically unsaturated groups of more than 2 mol/kg of binder, is adhesively bonded to the shaped articles, and the top layer is then cured by radiation.

11. A process for the production of laminated shaped articles comprising plastic, in particular automotive parts, wherein a radiation-curable laminated sheet or film comprising at least one substrate layer and a top layer, the top layer consisting of radiation-curable material which comprises a binder having a glass transition temperature below 50°C and a content of ethylenically unsaturated groups of more than 2 mol/kg of binder, is thermoformed in a thermoforming mold and the back of the substrate layer is sprayed with the plastics material, the radiation curing of the top layer being effected after the thermoforming process or after the spraying of the back.

12. A laminated shaped article obtainable by a process according to claim 10 or 11.

13. A radiation-curable laminated sheet or film comprising at least one substrate layer and a top layer consisting of radiation-curable material which comprises a binder having a glass transition temperature below 50°C and a content of ethylenically unsaturated groups of more than 2 mol/kg of binder, wherein a color-imparting intermediate layer is also present between the substrate layer and the top layer.

14. The radiation-curable laminated sheet or film according to claim 13, a layer of polymethyl methacrylates, polybutyl methacrylates, polyethylene terephthalates, polybutylene terephthalates, polyvinylidene fluorides, polyvinyl chlorides, polyesters, polyolefins, acrylonitrile-ethylene-propylene-diene-styrene copolymers (A-EPDM), polyetherimides, polyetherketones, polyphenylene sulfides, polyphenylene ethers or mixtures thereof also being present between the color-imparting intermediate layer and the top layer.

15. The radiation-curable laminated sheet or film according to either of claims 13 and 14, the radiation-curable material comprising polymers having ethylenically unsaturated groups and a molar mass of more than 2000 g/mol, optionally as a mixture with ethylenically unsaturated, low molecular weight compounds differing therefrom and having a molar mass of less than 2000 g/mol and/or mixtures of saturated, thermoplastic polymers with ethylenically unsaturated compounds.

16. The radiation-curable laminated sheet or film according to any of claims 13 to 15, wherein the radiation-curable material comprises not more than 10% by weight of compounds which have only one curable group.

17. The radiation-curable laminated sheet or film according to any of claims 13 to 16, the binder comprising at least one urethane (meth)acrylate which comprises at least one cycloaliphatic isocyanate as a component.

18. The radiation-curable laminated sheet or film according to any of claims 13 to 16, the binder comprising at least one urethane (meth)acrylate which comprises isophorone diisocyanate or hexamethylene diisocyanate as a component.

## Revendications

1. Utilisation d'une plaque ou d'une feuille stratifiée composite durcissable par rayonnement constituée par au moins une couche de substrat et une couche supérieure pour le revêtement de pièces moulées, **caractérisée en ce que** la couche supérieure est constituée d'un matériau durcissable par rayonnement, qui contient un liant ayant une température de transition vitreuse inférieure à 50 °C et une proportion de groupes éthyléniquement insaturés supérieure à 2 mol/kg de liant.

2. Utilisation d'une plaque ou d'une feuille stratifiée composite durcissable par rayonnement selon la revendication 1, dans laquelle la couche supérieure est transparente.

3. Utilisation d'une plaque ou d'une feuille stratifiée composite durcissable par rayonnement selon la revendication 1 ou 2, dans laquelle le liant contient au moins un (méth)acrylate d'uréthane qui contient en tant que composant constitutif au moins un isocyanate cycloaliphatique.

4. Utilisation selon la revendication 1 ou 2, dans laquelle le liant contient au moins un (méth)acrylate d'uréthane qui contient en tant que composant constitutif du diisocyanate d'isophorone ou du diisocyanate d'hexaméthylène.

5. Utilisation d'une plaque ou d'une feuille stratifiée composite durcissable par rayonnement selon l'une quelconque des revendications précédentes, dans laquelle une couche intermédiaire colorée se trouve encore entre la couche de substrat et la couche supérieure.

6. Utilisation d'une plaque ou d'une feuille stratifiée composite durcissable par rayonnement selon l'une quelconque des revendications précédentes, dans laquelle une couche en polyméthacrylates de méthyle, polyméthacrylates de butyle, polytéréphtalates d'éthylène, polytéréphtalates de butylène, polyfluorures de vinylidène, polychlorures de vinyle, polyesters, polyoléfines, copolymères d'acrylonitrile-éthylène-propylène-diène-styrène (A-EPDM), polyéther-imides, polyéther-cétones, polysulfures de phénylène, polyphénylène-éthers ou leurs mélanges se trouve encore entre la couche intermédiaire colorante et la couche supérieure.

7. Utilisation d'une plaque ou d'une feuille stratifiée composite durcissable par rayonnement selon l'une quelconque des revendications précédentes, dans laquelle le matériau durcissable par rayonnement contient des polymères comprenant des groupes éthyléniquement insaturés d'une masse molaire supérieure à 2 000 g/mol, éventuellement en mélange avec des composés éthyléniquement insaturés de faible poids moléculaire différents de ceux-ci, d'une masse molaire inférieure à 2 000 g/mol, et/ou des mélanges de polymères thermoplastiques saturés avec des composés éthyléniquement insaturés.

8. Utilisation d'une plaque ou d'une feuille stratifiée composite durcissable par rayonnement selon l'une quelconque des revendications précédentes, dans laquelle la couche de substrat est une couche en polymères thermoplastiques, notamment polyméthacrylates de méthyle, polyméthacrylates de butyle, polyuréthanes, polytéréphtalates d'éthylène, polytéréphtalates de butylène, polyfluorures de vinylidène, polychlorures de vinyle, polyesters, polyoléfines, polyamides, polycarbonates, polymères d'acrylonitrile-butadiène-styrène (ABS), copolymères d'acrylstyrène-acrylonitrile (ASA), copolymères d'acrylonitrile-éthylène-propylènediène-styrène (A-EPDM), polyéther-imides, polyéthercétones, polysulfures de phénylène, polyphénylèneéthers ou leurs mélanges.

9. Utilisation selon l'une quelconque des revendications précédentes, **caractérisée en ce que** le matériau durcissable par rayonnement ne contient pas plus de 10 % en poids de composés qui ne comprennent qu'un groupe durcissable.

10. Procédé de fabrication de pièces moulées revêtues, notamment de pièces d'automobiles, **caractérisé en ce qu'**une plaque ou une feuille stratifiée durcissable par rayonnement constituée par au moins une couche de substrat et une couche supérieure, la couche supérieure étant constituée d'un matériau durcissable par rayonnement, qui contient un liant ayant une température de transition vitreuse inférieure à 50 °C et une proportion de groupes éthyléniquement insaturés supérieure à 2 mol/kg de liant, est collée sur la pièce moulée, puis la couche supérieure est durcie par rayonnement.

11. Procédé de fabrication de pièces moulées revêtues en plastique, notamment de pièces d'automobiles, **caractérisé en ce qu'**une plaque ou une feuille stratifiée durcissable par rayonnement constituée par au moins une couche de substrat et une couche supérieure, la couche supérieure étant constituée d'un matériau durcissable par rayonnement, qui contient un liant ayant une température de transition vitreuse inférieure à 50 °C et une proportion de groupes éthyléniquement insaturés supérieure à 2 mol/kg de liant, est emboutie dans un outil d'emboutissage et le côté arrière de la couche de substrat est surmoulé avec le matériau plastique, le durcissement par rayonnement de la couche supérieure ayant lieu après le procédé d'emboutissage ou après le surmoulage.

12. Pièces moulées revêtues, pouvant être obtenues par un procédé selon la revendication 10 ou 11.

13. Plaque ou feuille stratifiée durcissable par rayonnement constituée par au moins une couche de substrat et une couche supérieure constituée d'un matériau durcissable par rayonnement, qui contient un liant ayant une température de transition vitreuse inférieure à 50 °C et une proportion de groupes éthyléniquement insaturés supérieure à 2 mol/kg de liant, **caractérisée en ce qu'**une couche intermédiaire colorante se trouve encore entre la couche de substrat et la couche supérieure.

14. Plaque ou feuille stratifiée durcissable par rayonnement selon la revendication 13, dans laquelle une couche en polyméthacrylates de méthyle, polyméthacrylates de butyle, polytéréphtalates d'éthylène, polytéréphtalates de butylène, polyfluorures de vinylidène, polychlorures de vinyle, polyesters, polyoléfines, copolymères d'acrylonitrileéthylène-propylène-diène-styrène (A-EPDM), polyéther-imides, polyéther-cétones, polysulfures de phénylène, polyphénylène-éthers ou leurs mélanges se trouve encore entre la couche intermédiaire colorante et la couche supérieure.

15. Plaque ou feuille stratifiée durcissable par rayonnement selon l'une quelconque des revendications 13 ou 14, dans laquelle le matériau durcissable par rayonnement contient des polymères comprenant des groupes éthyléniquement insaturés d'une masse molaire supérieure à 2 000 g/mol, éventuellement en mélange avec des composés éthyléniquement insaturés de faible poids moléculaire différents de ceux-ci, d'une masse molaire inférieure à 2 000 g/mol, et/ou des mélanges de polymères thermoplastiques saturés avec des composés éthyléniquement insaturés.

16. Plaque ou feuille stratifiée durcissable par rayonnement selon l'une quelconque des revendications 13 à 15, **caractérisée en ce que** le matériau durcissable par rayonnement ne contient pas plus de 10 % en poids de composés qui ne comprennent qu'un groupe durcissable.

17. Plaque ou feuille stratifiée durcissable par rayonnement selon l'une quelconque des revendications 13 à 16, dans laquelle le liant contient au moins un (méth)acrylate d'uréthane qui contient en tant que composant constitutif au moins un isocyanate cycloaliphatique.

18. Plaque ou feuille stratifiée durcissable par rayonnement selon l'une quelconque des revendications 13 à 16, dans laquelle le liant contient au moins un (méth)acrylate d'uréthane qui contient en tant que composant constitutif du diisocyanate d'isophorone ou du diisocyanate d'hexaméthylène.
